## Europäisches Patentamt

## European Patent Office

## Office européen des brevets

(11) Numéro de publication: **0 107 538**
**B1**

# FASCICULE DE BREVET EUROPÉEN

(45) Date de publication du fascicule du brevet:
**14.01.87**

(51) Int. Cl.⁴: **G 01 B 5/00**

(21) Numéro de dépôt: **83401842.6**

(22) Date de dépôt: **21.09.83**

(54) **Dispositif pour le contrôle de la position de la tête des amortisseurs de la suspension avant d'un véhicule.**

(30) Priorité: 30.09.82 FR 8216439
15.09.83 FR 8314670

(43) Date de publication de la demande:
**02.05.84 Bulletin 84/18**

(45) Mention de la délivrance du brevet:
**14.01.87 Bulletin 87/3**

(84) Etats contractants désignés:
**BE CH DE GB LI SE**

(56) Documents cité:
**EP-A-0 059 116**
**WO-A-81/01740**
**FR-A-2 423 748**

(73) Titulaire: **CELETTE S.A., 67 rue Maugiron B.P. 9
Vienne- Estressin, F-38206 Vienne Cedex (FR)**

(72) Inventeur: **Celette, Germain, 67, rue Maugiron,
F-38200 Vienne (FR)**

(74) Mandataire: **Tony- Durand, Serge, Cabinet Tony-
Durand 22, Boulevard Voltaire, F-75011 Paris (FR)**

EP 0 107 538 B1

LIBER, STOCKHOLM 1987

## Description

La présente invention concerne le contrôle de la position de la tête des amortisseurs de la suspension avant de type Mc Pherson sur la carrosserie d'un véhicule accidenté.

Un tel contrôle présente une très grande importance car la valeur des angles réels de carrossage et de chasse est directement liée à cette position: C'est pourquoi lors de la réparation de la carrosserie d'un véhicule équipé d'une suspension de ce type Mc Pherson il est indispensable de pouvoir procéder à la détermination de la position réelle de la tête des amortisseurs correspondants.

Mais jusqu'ici ce contrôle était effectué d'une façon relativement peu précise, par exemple en réalisant un montage rudimentaire au-dessus de l'extrémité avant de la carrosserie pour essayer de déterminer la position réelle de la tête des amortisseurs correspondants. Cette opération était peu pratique d'autant plus qu'il convenait de mesurer un certain nombre de distances par rapport à des points fixes déterminés et d'effectuer plusieurs calculs pour pouvoir obtenir les valeurs désirées.

C'est pourquoi la présente invention a pour but de réaliser un dispositif permettant une lecture directe des deux valeurs à déterminer, c'est-à-dire d'une part l'angle de déport, vers l'avant ou vers l'arrière, de la position de la tête de chaque amortisseur avant, et d'autre part l'angle d'inclinaison, vers l'extérieur ou l'intérieur de cette même tête d'amortisseur: Par ailleurs, ce dispositif, de conception très simple, est conçu pour être d'un emploi très pratique.

De même que l'appareillage de contrôle des déformations d'une carrosserie, qui est décrit dans le brevet FR-A-2.423.748, le présent dispositif comporte deux supports latéraux.

Mais ce dispositif est caractérisé en ce qu'il comprend:

- d'une part une traverse horizontale destinée à être placée au-dessus de l'avant du véhicule à contrôler et dont les extrémités s'articulent autour de deux axes transversaux portés par lesdits latéraux;

- d'autre part deux curseurs montés coulissants sur cette traverse et portant chacun un doigt de contrôle, pivotant autour d'un axe disposé dans le sens longitudinal et dont l'extrémité inférieure est destinée à être placée en regard du centré de la tête de l'un ou l'autre des amortisseurs correspondants;

- des graduations distinctes permettant de déterminer, après cette mise en coïncidence, l'angle de déport de la traverse vers l'avant ou l'arrière par rapport auxdits supports latéraux, ainsi que l'inclinaison vers l'extérieur ou l'intérieur des doigts de contrôle des curseurs.

Selon une autre caractéristique du dispositif selon l'invention, les supports latéraux de la traverse horizontale sont montés sur des colonnes verticales et chacun de ces supports comporte une graduation en regard de laquelle se déplace un index porté par la traverse horizontale et qui permet ainsi de lire directement l'angle de déport de cette dernière vers l'avant ou vers l'arrière.

Quant aux curseurs, qui sont montés coulissants sur la traverse horizontale, ils sont eux-mêmes munis d'une graduation en regard de laquelle se déplace un index porté par le doigt de contrôle correspondant afin de permettre la lecture directe de l'angle d'inclinaison de celui-ci vers l'extérieur ou l'intérieur.

Cependant d'autres particularités du présent dispositif apparaîtront au cours de la description suivante d'un exemple de réalisation de celui-ci. Cette description est donnée en référence au dessin annexé à simple titre indicatif, et sur lequel :

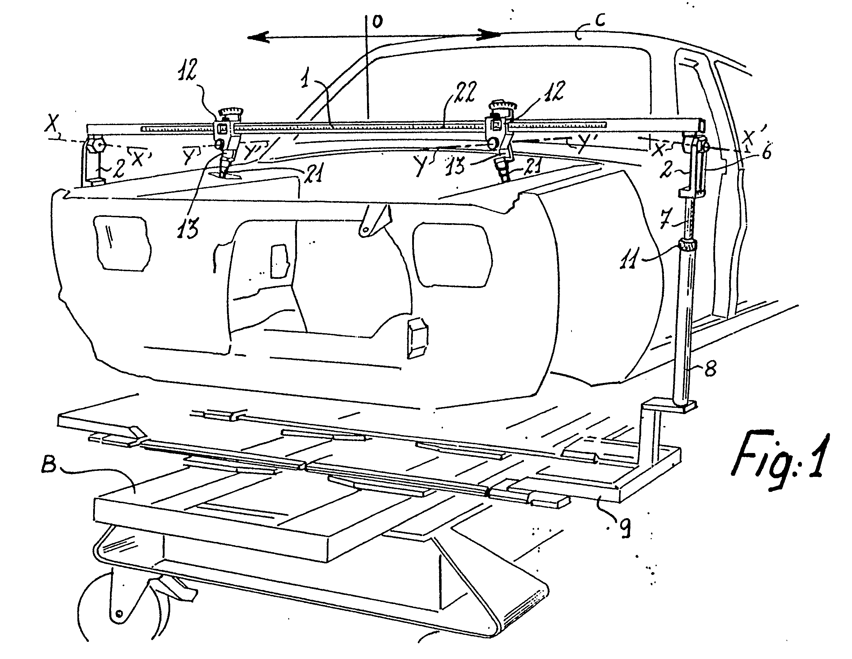

La figure 1 est une vue en perspective du présent dispositif lors de son utilisation sur la carrosserie d'un véhicule.

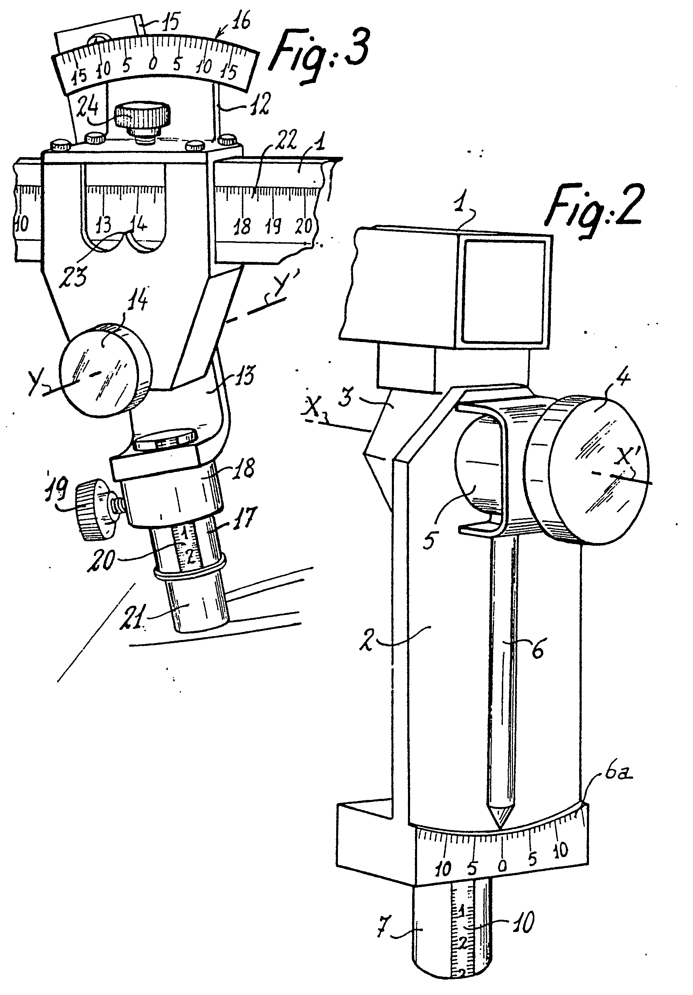

La figure 2 est une vue en perspective, à échelle différente, représentant le mode de montage de l'une des extrémités de la traverse horizontale sur le support latéral correspondant.

La figure 3 est une vue en perspective, à échelle différente, représentant l'un des curseurs porté par la traverse horizontale du présent dispositif.

La figure 4 est une vue en perspective d'une autre forme de réalisation du dispositif selon l'invention.

Comme déjà indiqué celui-ci comprend une traverse horizontale 1 destinée à être disposée au-dessus de l'extrémité avant de la carrosserie C d'un véhicule accidenté, cette carrosserie étant alors fixée sur un châssis ou banc de contrôle B. A chacune de ses extrémités la traverse horizontale est montée articulée sur un support latéral 2. A cet effet chacune des extrémités de cette traverse est solidaire de pièces inférieures 3 montées articulées autour d'un axe horizontal transversal XX' porté par le support correspondant, un bouton moleté 4 permettant de freiner la liberté d'articulation de la traverse 1 ou de la bloquer dans la position voulue.

Une douille 5 solidaire de la pièce 3 porte un index 6 dont l'extrémité inférieure est disposée en regard d'une graduation 6a prévue sur le support latéral 2 correspondant. L'extrémité inférieure de chacun de ces supports comporte une tige verticale 7 adaptée à être engagée dans une colonne 8 portée par des pièces de montage 9 fixées sur le banc de contrôle B. La tige 7 peut coulisser à l'intérieur de la colonne 8 pour régler à volonté la position en hauteur de la traverse 1, une graduation 10 étant portée à cet effet par cette tige cependant qu'un manchon de blocage 11 est prévu sur la colonne 8.

La traverse horizontale 1 porte deux curseurs 12 dont chacun comporte un doigt pivotant de contrôle 13. Chacun de ceux-ci s'articule sur le curseur correspondant autour d'un axe YY' disposé dans le sens longitudinal, un bouton moleté 14 permettant de freiner cette liberté d'articulation ou de bloquer le doigt de contrôle correspondant dans la position voulue.

A son extrémité supérieure chaque doigt de contrôle 13 porte un index 15 se déplaçant en regard d'une graduation 16, en arc de cercle, prévue sur le curseur 12 correspondant.

A son extrémité inférieure chacun de ces doigts de contrôle comporte un piston 17 monté coulissant à l'intérieur d'une douille 18 et qui peut être immobilisé au moyen d'un bouton moleté 19, une graduation 20 permettant de déterminer la position exacte de ce piston. Celui-ci est muni en bout d'un organe 21 de positionnement qui peut comporter une empreinte permettant de l'adapter très exactement sur la tête de l'un des amortisseurs d'une suspension Mc Pherson.

La traverse horizontale 1 est pourvue d'une double graduation 22 dont le zéro est disposé au milieu. Cette graduation est destinée à permettre le réglage de la position des curseurs 12. A cet effet chacun d'eux comporte un index 23 disposé en regard de cette graduation, un bouton moleté 24 permettant de l'immobiliser dans la position voulue.

Pour procéder au contrôle de la position réelle de la tête des amortisseurs avant d'une suspension de type Mc Pherson sur une carrosserie accidentée, il convient de placer les supports 9 dès colonnes verticales 8 dans les positions mentionnées par la fiche de dimensions correspondant au type du véhicule à contrôler. Ensuite il suffit de déplacer la traverse 1 vers l'avant ou vers l'arrière et de faire pivoter les doigts de contrôle 13 vers l'intérieur ou l'extérieur jusqu'à ce que les organes de détection 21 soient au contact de la tête des amortisseurs correspondants. Lorsque cette mise en coïncidence a été réalisée on peut lire directement les angles à mesurer, respectivement sur les graduations des supports latéraux 2 et sur celle des curseurs 12.

En effet sur les graduations des supports latéraux on relève directement la valeur de l'angle de déport de la traverse 1 vers l'avant ou vers l'arrière, ce qui permet de connaître immédiatement l'angle relatif à l'angle de chasse. Par ailleurs sur les graduations 16 des curseurs on peut alors relever les angles d'inclinaison des doigts de contrôle 13, vers l'intérieur ou l'extérieur, ce qui indique immédiatement l'angle relatif au carrossage. Bien entendu, la double graduation 22 existant sur la traverse 1 permet de placer les curseurs 12 dans les positions voulues indiquées par la fiche technique correspondant au véhicule à contrôler.

Il convient de noter que la mise en place des organes de détection 21 contre la tête des amortisseurs correspondants peut être effectuée très facilement soit en faisant descendre l'ensemble mobile constitué par la traverse 1 et ses supports latéraux après un relèvement préalable de cet ensemble, soit en escamotant momentanément les pistons mobiles 17 au moment de la mise en place du dispositif de contrôle.

Comme on peut le constater le présent dispositif permet de déterminer très rapidement, et sans aucun calcul les angles relatifs à la chasse et au carrossage sur la carrosserie d'un véhicule accidenté ou éventuellement d'un véhicule non accidenté. Il s'agit donc d'un avantage essentiel de ce dispositif par rapport aux systèmes de mesures employés jusqu'ici.

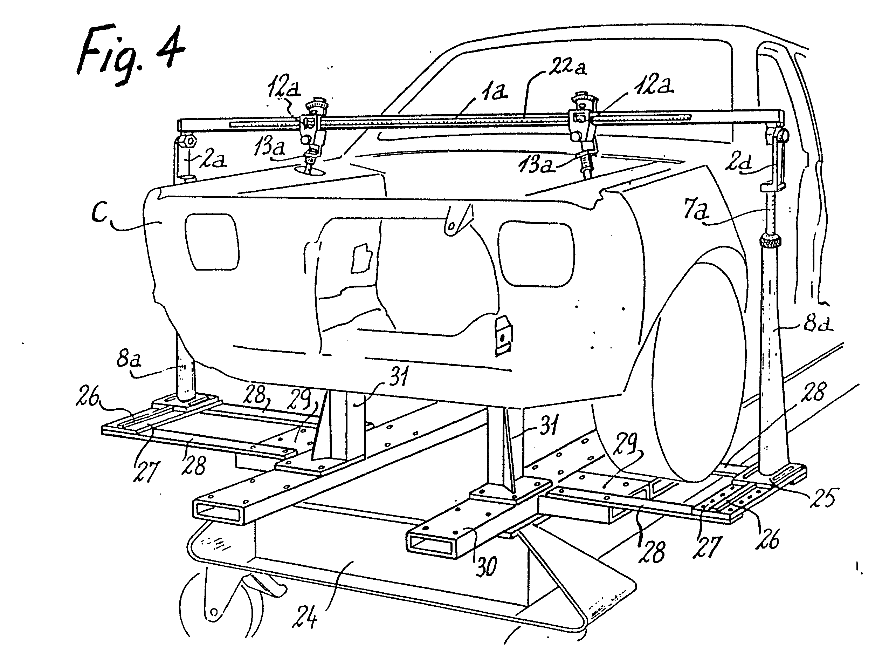

La figure 4 représente une autre forme de réalisation du dispositif selon l'invention, laquelle est spécialement conçue pour permettre le contrôle de la position de la tête des amortisseurs de type Mc Pherson sur un banc de contrôle utilisé, par ailleurs, pour la vérification de la carrosserie d'un véhicule, afin que cette opération ne soit pas réalisée de façon, en quelque sorte "indépendante", mais en liaison étroite avec le contrôle des autres points à vérifier de la carrosserie d'un véhicule accidenté.

Ce dispositif est similaire à celui décrit précédemment. En conséquence, il comporte une traverse horizontale la destinée à être disposée au-dessus de l'extrémité avant de la carrosserie C d'un véhicule accidenté. Précédemment, cette traverse porte deux curseurs 12a dont chacun comporte un doigt pivotant de contrôle 13a. Or, l'agencement de cette traverse et des curseurs ainsi prévus est exactement le même que dans la forme de réalisation décrite précédemment.

Du reste, le présent dispositif se différencie de cette forme de réalisation uniquement par le fait que les tiges inférieures 7a des supports latéraux 2a de la traverse la sont portés par deux colonnes 8a associées à des moyens permettant la fixation de ces dernières directement sur un banc 24 destiné à assurer le contrôle et/ou la réparation de la carrosserie d'un véhicule. Ce banc est avantageusement du type de celui décrit dans le brevet français FR-A-24 23 748 déposé par la Société Demanderesse le 21 avril 1978.

A cet effet, les colonnes 8a comportent, à leur pied, une embase 25 montée coulissante sur une glissière longitudinale 26 prévue sur une semelle horizontale 27 portée par un support adapté à être fixé sur le banc correspondant 24. Chacun de ces supports peut être constitué par deux bras horizontaux parallèles 28 destinés à être disposés dans le sens transversal et dont l'une des extrémités porte la semelle correspondante 27 cependant que les extrémités opposées sont adaptées à être fixées sur des appendices latéraux 29 prévus près des extrémités avant des longerons 30 du banc de contrôle 24.

Par ailleurs, ce dernier comporte un jeu de ferrures d'attache spécialement conçues pour assujettir, sur ce banc, la carrosserie C du véhicule à contrôler. Ainsi, à leurs extrémités avant les longerons 30 de ce banc comportent deux ferrures 31 destinées à être fixées sur des points déterminés de la partie avant de la carrosserie C, une paire de ferrures d'attache similaires étant prévue à l'extrémité arrière pour être fixée sur deux autres points déterminés de cetts même carrosserie. Par ailleurs, comme décrit dans le brevet français FR-A-24 23 748 mentionné ci-dessus, ce banc de contrôle comporte un certain nombre d'autres accessoires permettant de vérifier la position exacte d'une série de points déterminés de la carrosserie à contrôler.

Dans ces conditions, le présent dispositif permet de contrôler la position de la tête des amortisseurs d'une suspension avant de type Mac Pherson, non plus d'une façon "indépendante", mais en relation directe avec la vérification de tous les autres points de contrôle d'une carrosserie accidentée. Ceci permet donc un contrôle beaucoup plus précis et valable que dans le cas d'une vérification faite indépendamment des autres points à contrôler.

Il convient de noter que lors des opérations de contrôle, il est possible de déplacer les colonnes latérales 8a dans le sens longitudinal par coulissement de leur embase 25 sur les semelles 26 prévues de part et d'autre du présent banc de contrôle. Cependant, les conditions d'utilisation du présent dispositif sont, par ailleurs, exactement les mêmes que dans le cas de la forme de réalisation décrite précédemment.

## Revendications

1. Dispositif pour le contrôle de la position de la tête des amortisseurs de la suspension avant de type Mc Pherson d'un véhicule comportant deux supports latéraux (2, 2a), caractérisé en ce qu'il comprend:
- d'une part une traverse horizontale (1, 1a) destinée à être placée au-dessus de l'avant du véhicule (C) à contrôler et dont les extrémités sarticulent autour de deux axes transversaux (XX') portés par lesdits deux supports latéraux (2, 2a) ;
- d'autre part deux curseurs (12, 12a) montés coulissants sur cette traverse et portant chacun un doigt de contrôle (13, 13a), pivotant autour d'un axe (Y-Y') disposé dans le sens longitudinal, et dont l'extrémité inférieure est destinée à être placée en regard du centre de la tête de l'un ou l'autre des amortisseurs correspondants .
- des graduations distinctes permettant de déterminer, après cette mise en coïncidence, l'angle de déport de la traverse (1, 1a) vers l'avant ou l'arrière par rapport auxdits supports latéraux, ainsi que l'inclinaison vers l'extérieur ou l'intérieur des doigts de contrôle (13, 13a) des curseurs.

2. Dispositif de contrôle selon la revendication 1, caractérisé en ce que les supports latéraux (2, 2a) de la traverse horizontale (1) sont montés sur des colonnes verticales (8, 8a), et chacun de ces supports comporte une graduation en regard de laquelle se déplace un index (6) porté par la traverse horizontale (1, la) et qui permet ainsi de lire directement l'angle de déport de cette dernière vers l'avant ou vers l'arrière.

3. Dispositif de contrôle selon l'une des revendications précédentes, caractérisé en ce que les curseurs (12, 12a), qui sont montés coulissants sur la traverse horizontale (1, 1a), sont eux-mêmes munis d'une graduation (16) en regard de laquelle se déplace un index (15) porté par le doigt de contrôle (13, 13a) correspondant afin de permettre la lecture directe de l'angle d'inclinaison de celui-ci vers l'extérieur ou l'intérieur.

4. Dispositif de contrôle selon l'une des revendications précédentes, caractérisé en ce que l'extrémité inférieure du doigt de contrôle (13,13a) pivotant porté par chaque curseur mobile (12, 12a) comporte un piston coulissant (17) susceptible d'être escamoté vers le haut de la mise en place de l'ensemble.

5. Dispositif de contrôle selon l'une des revendications précédentes, caractérisé en ce que la traverse horizontale (1, 1a) comporte une double graduation (22, 22a) dont le zéro est situé au milieu et chaque curseur est pourvu d'un repère permettant de déterminer sa position sur cette traverse.

6. Dispositif de contrôle selon la revendication 2 ou l'une des revendications 3 à 5 référencées à la revendication 2, caractérisé en ce que les deux colonnes (8a) comportent, à leur pied, une embase (25) montée coulissante sur une glissière longitudinale (26) prévue sur une semelle horizontale (27) portée par un support fixé sur l'un ou l'autre côté d'un banc (24) de contrôle et/ou de réparation d'une carrosserie d'automobile.

7. Dispositif de contrôle selon la revendication 6, caractérisé en ce que le support de chaque semelle horizontale (27) consiste en deux bras horizontaux pàrallèles (28) disposés dans le sens transversal et sur une extrémité desquels est fixée la semelle horizontale (27) correspondante, alors que leur extrémité opposée est destinée à être fixée au moyen du support respectif sur le côté respectif du banc (24).

8. Dispositif de contrôle selon l'une des revendications 6 et 7, caractérisé en ce que le banc (24) comporte des longerons (30) qui comportent près de leur extrémité avant, des appendices latéraux (29) recevant le support (2a) des semelles horizontales (27) servant ellesmêmes de support aux colonnes verticales (8a).

## Patentansprüche

1. Anordnung zur Lagekontrolle von Stoßdämpferköpfen der Vorderradaufhängung vom Typ Mc Pherson eines Fahrzeugs, bestehend aus zwei seitlichen Trägern (2, 2a), dadurch gekennzeichnet, daß sie besteht aus:
- einerseits einer horizontalen Traverse (1, 1a), welche über der Vorderseite des zu prüfenden Fahrzeuges angeordnet ist, deren äußere Enden um zwei transversale Achsen (XX'), die durch die genannten seitlichen Träger (2, 2a) getragen werden, gelenkig gelagert sind.
- andererseits zwei Schiebern (12, 12a), die gleitend auf dieser Traverse befestigt sind und von denen jeder einen Prüfstift (13, 13a) trägt, der schwenkbar um eine in Längsrichtung angeordnete Achse (Y-Y') angeordnet ist, wobei das äußere, untere Ende jedes Prüfzapfens im Hinblick auf den Mittelpunkt des Kopfes des einen oder anderen entsprechenden Stoßdämpfers angeordnet werden kann;

- bestimmten Gradeinteilungen, welche nach Koinzidenz den Versetzungswinkel der Traverse (1, 1a) nach vorne oder hinten in bezug auf die genannten seitlichen Träger ebenso wie die Neigung nach außen oder innen der Prüftstifte (13, 13a) der Schieber zu bestimmen gestatten.

2. Anordnung nach Anspruch 1, dadurch gekennzeichnet, daß die seitlichen Träger (2, 2a) der horizontalen Traverse (1) an senkrechten Säulen (8, 8a) befestigt sind, wobei jeder Träger eine Gradeinteilung aufweist, gegenüber welcher ein Zeiger (6) angeordnet ist, der durch die horizontale Traverse (1, 1a) getragen wird und welcher das direkte Ablesen des Versetzungswinkels der Traverse nach vorne oder hinten ermöglicht.

3. Anordnung nach einem der vorhergehenden Ansprüche 1 und 2, dadurch gekennzeichnet, daß die gleitend auf der horizontalen Traverse (1, 1a) angeordneten Schieber (12, 12a) selbst mit einer Gradeinteilung (16) versehen sind, gegenüber welcher sich ein durch den Prüfstift (13, l3a) getragener Zeiger (15) verschiebt, um das direkte Ablesen des Neigungswinkels des Prüfzapfens nach außen oder innen zu ermöglichen.

4. Anordnung nach irgendeinem der vorhergehenden Ansprüche, dadurch gekennzeichnet, daß das äußere, untere Ende des Prüfstiftes (13, 13a), der durch jeden beweglichen Schieber (12, 12a) schwenkbar getragen wird, einen gleitenden Kolben (17) aufweist, der nach oben zur Einstellung der Anordnung zurückgezogen werden kann.

5. Anordnung nach irgendeinem der vorhergehenden Ansprüche, dadurch gekennzeichnet, daß die horizontale Traverse (1, 1a) eine doppelte Gradeinteilung (22, 22a) aufweist, deren Nullstellung sich in der Mitte. befindet, wobei jeder Schieber mit einer Markierung versehen ist, welche die Bestimmung seiner Stellung auf der genannten Traverse ermöglicht.

6. Anordnnung nach Anspruch 2 oder irgendeinem der Ansprüche 3 bis 5, dadurch gekennzeichnet, daß die zwei Säulen (8a) an ihrem Fuß einen Ansatz (25) aufweisen, der gleitend auf einer längsverlaufenden Führungsbahn (26) angeordnet ist, die auf einer horizontalen Fußplatte (27) vorgesehen ist und von einem Träger getragen wird, der auf der einen oder anderen Seite einer Bank (24) zur Prüfung und/oder Reparation einer Automobilkarosserie befestigt ist.

7. Anordnung nach Anspruch 6, dadurch gekennzeichnet, daß der Träger jeder horizontalen Fußplatte (27) zwei horizontal verlaufende, parallele Arme (28) aufweist, der in transversaler Richtung angeordnet sind, wobei auf einem äußeren Ende derselben die horizontale Fußplatte (27) befestigt ist, während das entgegengesetzte äußere Ende mittels eines wechselseitigen Trägers auf der wechselseitigen Seite der Bank (24) befestigt ist.

8. Anordnung nach einem der Ansprüche 6 und 7, dadurch gekennzeichnet, daß die Bank (24) zwei Holme (30) aufweist, welche in der Nähe ihres äußeren, vorderen Endes seitliche Ansätze (29) aufweisen, welche den Träger (2a) der horizontalen Fußplatten (27) aufnehmen, welche selbst als Träger der senkrechten Säulen (8a) dienen.

**Claims.**

(1) Device for monitoring the position of the head of the dampers of the front suspension system of the McPherson type of a vehicle, comprising two lateral supports, 2,2a, characterized by the fact that it comprises:

- firstly, a horizontal crosspiece 1, 1a, which is designed to be positioned above the front of the vehicle C to be monitored and of which the extremities are articulated about two transversal axes XX' borne by the aforementioned two lateral supports 2, 2a;

- secondly, two runners 12, 12a, slidably mounted on the said crosspiece and each bearing an indication finger 13, 13a, pivoted about an axis Y-Y' taking the longitudinal direction, its lower end designed to be positioned opposite the centre of the head of one or other of the corresponding dampers;

also a graduated scale which, after the latter have been made to coincide in position as stated, provides a means of determining the angle by which the crosspiece 1, 1a, deviates forwards or backwards in relation to the said lateral supports and also the angle of outward or inward inclination of the control fingers 13, 13a, of the runners.

(2) Control devices in accordance with Claim 1, characterized by the fact that the lateral supports 2, 2a, of the horizontal crosspiece 1 are mounted on vertical columns 8,8a, and each of these supports possesses a graduated scale opposite which moves a pointer 6 borne by the horizontal crosspiece 1, la, thus providing a direct reading of the angle of forward or backward deviation of the said crosspiece.

(3) Control devices in accordance with either the preceding Claims, characterized by the fact that the runners 12, 12a, which are slidably mounted on the horizontal crosspiece 1, la, themselves possess with a graduated scale 16 opposite which moves a pointer 15 borne by the corresponding control finger 13, 13a, in order to provide a direct reading of the outward or inward angle of inclination of the latter.

(4) Control devices in accordance with any one of the preceding claims, characterized by the fact that the lower end of the pivoting control finger 13, 13a, borne by each runner 12, 12a, comprises a sliding piston 17 capable of being retracted in the ascending direction when the assembly is being installed.

(5) Control devices in accordance with any one of the preceding Claims, characterized by the fact that the horizontal crosspiece 1, 1a, includes a double graduated scale 22, 22a, of which the zero point is situated in the middle, each runner being provided with a reference mark serving to ascertain its position on the said crosspiece.

(6) Control devices in accordance with Claim 2, of one of Claims 3-5 referring back to Claim 2, characterized by the fact that the two columns 8a are provided at the bottom with a base 25 slidably mounted on a longitudinal slide 26 mounted on a horizontal sole piece 27 borne by a support affixed to one side or the other of a motor vehicle body inspection and/or repair bench 24.

(7) Control devices in accordance with Claim 6, characterized by the fact that each horizontal sole piece 27 consists of two parallel horizontal arms 28 which are positioned longitudinally and to one end of which is affixed the corresponding horizontal sole piece 27, while their opposite end is designed to be affixed by means of the respective support to the respective side of the bench 24.

(8) Control devices in accordance with either of Claims 6,7 characterized by the fact that the bench 24 comprises longitudinal frame members 30 provided near their front end with lateral attachments 29 receiving the support 2a of the horizontal sole pieces 27 themselves serving as a support for the vertical columns 8a.

Fig:1

0 107 538

Fig.3

Fig.2

Fig. 4